# EUROPÄISCHE PATENTSCHRIFT

(11) **EP 2 651 842 B1**
(45) Veröffentlichungstag und Bekanntmachung des Hinweises auf die Patenterteilung: **18.03.2015**
(21) Anmeldenummer: 12713141.5
(22) Anmeldetag: 04.04.2012
(51) Int. Cl.: C03C 17/00

(54) **DRUCKBARES FARBGEMISCH, VERFAHREN ZUM HERSTELLEN EINES FARBIGEN AUFDRUCKS UND VERWENDUNG DES FARBGEMISCHES**
PRINTABLE INK MIXTURE, METHOD FOR PRODUCING A COLORED OVERPRINT, AND USE OF THE INK MIXTURE
MÉLANGE DE COULEUR IMPRIMABLE, PROCÉDÉ POUR PRODUIRE UNE SURIMPRESSION EN COULEUR ET UTILISATION DU MÉLANGE DE COULEUR

(30) Priorität: 05.04.2011 DE 102011006758
(43) Veröffentlichungstag der Anmeldung: 23.10.2013
(73) Patentinhaber: OSRAM GmbH, 80807 München (DE)
(72) Erfinder: SCHIPLAGE, Matthias, 86368 Gersthofen (DE); POESL, Ewald, 86438 Kissing (DE); SCHMIDT, Matthias, 86356 Neusäß (DE)
(86) Internationale Anmeldenummer: PCT/EP2012/056193
(87) Internationale Veröffentlichungsnummer: WO 2012/136716

(56) Entgegenhaltungen:
- DE-A1- 4 407 366
- US-A- 4 147 823
- US-A1- 2003 089 271
- US-A1- 2007 017 402

## Beschreibung

Die Anmeldung betrifft ein druckbares Farbgemisch, ein Verfahren zum Herstellen eines farbigen Aufdrucks auf einer Glas- oder Keramikoberfläche und die Verwendung des Farbgemisches für einen farbigen Aufdruck auf Leuchtkörpern.

Für farbige Kennzeichnungen auf Glas- oder Keramikoberflächen, beispielsweise Leuchtkörpern, sind dauerhafte, witterungs- und chemikalienbeständige Aufdrucke wünschenswert. Bislang werden für solche Zwecke beispielsweise Bleiborat-Kupferoxid-Pasten verwendet, die aufgrund ihres Bleigehaltes jedoch als giftig (T) und umweltgefährlich (N) zu kennzeichnen sind und somit besondere Anforderungen an Lagerung, Verarbeitung und Umweltschutz stellen. Bislang bekannte bleifreie Präparationen sind zum Teil nicht ausreichend viskositätsstabil und/oder nur für wenige, ausgewählte Pigmente geeignet. Zudem erfordert die Herstellung solcher Farben aufwändige Mahl- und Dispergierverfahren.

Aus der US 4,147,823 ist ein druckbares Farbgemisch für Glas- oder Keramiksubstrate bekannt, das bleifrei ist.

Die US 2003/0089271 A1 beschreibt eine wasserbasierte Tintenzusammensetzung für Schreibgeräte.

Die US 2007/0017402 A1 beschreibt eine Paste zur Verwendung in Öfen die Email-frei ist.

Aus der DE 44 07 366 A1 ist eine emailartige Siebdruckfarbe für Glasoberflächen bekannt.

Eine Aufgabe der Erfindung ist somit das Bereitstellen eines druckbaren Farbgemisches, das verbesserte Eigenschaften aufweist. Diese Aufgabe wird durch ein Farbgemisch gemäß Anspruch 1 gelöst. Ein Verfahren zur Herstellung eines farbigen Aufdrucks auf einer Glas- oder Keramikoberfläche, die Verwendung des Farbgemisches für einen farbigen Aufdruck auf Leuchtkörpern sowie Ausführungsformen des Farbgemisches und des Verfahrens sind Gegenstand weiterer Ansprüche.

Gemäß einer Ausführungsform wird ein druckbares Farbgemisch angegeben, das ein Medium, ortho-Phosphorsäure, zumindest ein Metalloxid, und zumindest ein Pigment aufweist.

Unter "Farbgemisch" ist im Folgenden eine Pigmentpräparation bzw. eine Pigmentpaste zu verstehen, also eine Flüssigkeit, in der Pigmente dispergiert vorliegen.

Unter "Medium" ist im Folgenden ein Dispergiermittel oder Dispersions-Medium beziehungsweise eine Flüssigkeit zu verstehen, in der zumindest eine dispergierte Phase, beispielsweise Pigmente, vorliegt.

Unter "zumindest einem Metalloxid" und "zumindest einem Pigment" ist im Folgenden zu verstehen, dass entweder ein oder mehrere, verschiedene Metalloxide beziehungsweise Pigmente in dem Farbgemisch vorhanden sind. Wenn nichts anderes angegeben ist, werden im Folgenden auch die Begriffe "Metalloxid", "Metalloxide", "Pigment" und "Pigmente" mit dieser Bedeutung verstanden.

Das Farbgemisch liegt als Suspension dieser Komponenten vor, das heißt, die festen Pigmente sind in dem flüssigen Gemisch dispergiert. Diese Suspension weist eine sehr gute Viskositätsstabilität auf, da die Metalloxide und Pigmente mit dem Gemisch aus Medium und ortho-Phosphorsäure nicht reagieren. Somit kann eine Lagerstabilität des Farbgemisches, beispielsweise von mindestens zwölf Monaten, gewährleistet werden.

Zudem kann durch geeignete Wahl der Komponenten das Farbgemisch ohne giftige oder umweltgefährdende Bestandteile bereitgestellt werden. Damit ist das druckbare Farbgemisch RoHS konform (EG-Richtlinie zur Beschränkung der Verwendung bestimmter gefährlicher Stoffe in Elektro- und Elektronikgeräten). Beispielsweise können alle Komponenten bleifrei ausgewählt werden.

Das Pigment in dem Farbgemisch kann aus anorganischen Pigmenten ausgewählt sein. Jedes anorganische Pigment kann in dem Farbgemisch eingesetzt werden, da es mit dem Medium und der ortho-Phosphorsäure verträglich ist und durch ortho-Phosphorsäure und Medium ausreichend benetzt wird.

Gemäß einer Ausführungsform ist das Medium mit einem Anteil von 25 bis 45 Gew% in dem Farbgemisch vorhanden. Über die Konzentration des Mediums kann die je nach Anwendung erforderliche Verarbeitungsviskosität der Suspension eingestellt werden.

Weiterhin ist ortho-Phosphorsäure mit einem Anteil von 8 bis 22 Gew% in dem Farbgemisch vorhanden. Nach Verarbeitung des Farbgemisches, also beispielsweise nach dem Einbrand des Aufdrucks auf einer Glas- oder Keramikoberfläche, weist der mit dem Farbgemisch, das 8 bis 22 Gew% ortho-Phosphorsäure enthält, hergestellte farbige Aufdruck eine ausreichende Haftfestigkeit, Beständigkeit und Abriebfestigkeit auf der Glas- oder Keramikoberfläche auf. Ein Anteil von weniger als 8 Gew% ortho-Phosphorsäure in dem Farbgemisch würde die Haftfestigkeit, Beständigkeit und Abriebfestigkeit verringern, ein Anteil von mehr als 22 Gew% würde die korrosive Eigenschaft des Farbgemischs verstärken, so dass beispielsweise Metallwerkzeuge, die zum Aufdrucken des Farbgemisches verwendet werden, beschädigt werden könnten. Die ortho-Phosphorsäure wird während des Einbrands des farbigen Aufdrucks zu ringförmigem meta-Phosphat und/oder kettenförmigem Polyphosphat kondensiert. Die hierbei entstehende glasartigen Strukturen verbinden die Pigment-Partikel miteinander und mit der Glas- oder Keramikoberfläche.

Das zumindest eine Metalloxid ist in dem Farbgemisch weiterhin mit einem Anteil von 1 bis 3 Gew% vorhanden. Dadurch wird eine sehr gute Haftfestigkeit, Beständigkeit und Abriebfestigkeit erzielt. Ein Anteil von weniger als 1 Gew% an Metalloxid in dem Farbgemisch würde zu einer Abnahme der Haftfestigkeit, Beständigkeit und Abriebfestigkeit des farbigen Aufdrucks führen. Ein Anteil von mehr als 3 Gew% bewirkt keine weitere Verbesserung der oben genannten Eigenschaften. Somit kann auf einen höheren Anteil als 3 Gew% an Metalloxid in dem Farbgemisch verzichtet werden, um Kosten und Material zu sparen.

Das zumindest eine Pigment ist in dem druckbaren Farbgemisch mit einem Anteil von 35 bis 50 Gew% enthalten. Damit wird eine gute Deckkraft und der gewünschte Farbeindruck in dem Farbgemisch sowie in einem daraus hergestellten farbigen Aufdruck bewirkt. Unterhalb von 35 Gew% kann die Deckkraft abnehmen und zu einem blassen Aussehen des aus dem Farbgemisch hergestellten Aufdrucks führen, oberhalb von 50 Gew% kann der farbige Aufdruck ein raues und poröses Aussehen annehmen und zur Kreidung der Pigmente führen.

Das Metalloxid kann in dem Farbgemisch als Nanopulver ausgeformt sein. Darunter ist im Folgenden zu verstehen, dass das Metalloxid als Pulver vorliegt, und das Pulver Partikel umfasst, deren Durchschnittsgröße im nanoskaligen Bereich liegt. So können die einzelnen Partikel, sogenannte Primär-Partikel, des Nanopulvers eine Durchschnittsgröße von 15 bis 20 nm aufweisen, wobei in dem Farbgemisch auch Agglomerate der Partikel vorliegen können, die eine Durchschnittsgröße von 30 bis 100 nm aufweisen können.

Das als Nanopulver vorliegende Metalloxid kann in dem Farbgemisch mehrere Funktionen einnehmen. Als Adhäsions-Additiv verbessert es die Haftfestigkeit, Abriebfestigkeit sowie die chemische Beständigkeit. Als Verdickungsmittel verhindert das Metalloxid die Sedimentation der Pigmente in dem Farbgemisch. Dadurch wird die Lagerstabilität verbessert.

Das Metalloxid kann ein dreiwertiges Metallkation umfassen. Beispielsweise kann das Metallkation aus einer Gruppe ausgewählt sein, die Kationen von Aluminium, Scandium, Yttrium und Lanthanoiden, beispielsweise Lanthan oder Gadolinium umfasst. Es können also Nanopulver von beispielsweise Aluminiumoxid, Yttriumoxid, Gadoliniumoxid oder Lanthanoxid eingesetzt werden. Der Einsatz von Scandiumoxid, Samariumoxid, Disprosiumoxid, Neodymoxid und weiterer Lanthanoidoxide ist ebenso denkbar.

Die ausgewählten Metalloxide weisen eine positive Oberflächenladung auf, womit eine gute Haftung des aus dem Farbgemisch hergestellten farbigen Aufdrucks an einer negativen geladenen Glas- oder Keramikoberfläche erzielt wird. Dieser Effekt kann insbesondere durch Nanopulver der genannten Metalloxide bewirkt werden. Nanopulver von SiO₂ führen beispielsweise zu einer weniger stabilen Struktur des Farbgemisches, womit ein aus einem solchen Farbgemisch hergestellter farbiger Aufdruck keine für eine Produktionsanwendung ausreichende Haftung, Abriebfestigkeit und Beständigkeit aufweist.

Das Medium kann Glycerin sein. Insbesondere kann das Medium wasserfreies Glycerin umfassen. Mit dem Glycerin kann die Verarbeitungsviskosität des Farbgemisches eingestellt werden.

Die ortho-Phosphorsäure kann Wasser mit einer Konzentration von 15% enthalten. Somit kann die ortho-Phosphorsäure eine 85%ige Phosphorsäure sein. Die Verwendung von niedriger konzentrierter ortho-Phosphorsäure ist ebenso möglich.

Das Pigment in dem Farbgemisch kann aus anorganischen C.I. Pigmenten ausgewählt sein. Unter C.I. Pigmenten ist im diesem Zusammenhang jedes Pigment, das nach dem Colour Index (C.I.) klassifiziert ist, gemeint. Über den C.I. Index kann jedem Pigment eine eindeutige Struktur zugewiesen werden, womit eine eindeutige Zuordnung von Farbpigmenten und eine gängige Bezeichnung gewährleistet ist. Jedes anorganische C.I. Pigment kann in dem Farbgemisch eingesetzt werden, da es mit dem Medium und der ortho-Phosphorsäure verträglich ist und durch ortho-Phosphorsäure und Medium ausreichend benetzt wird. Somit können mit dem Farbgemisch sämtliche, je nach Anwendung gewünschte Farben als farbige Aufdrucke hergestellt werden. Auch Mischungen verschiedener anorganischer Pigmente zur Erzeugung von Mischfarben können in dem Farbgemisch vorhanden sein.

Das Farbgemisch kann bleifrei sein. Somit handelt es sich um ein nicht giftiges und nicht umweltgefährdendes Farbgemisch, das RoHS konform ist.

Ein druckbares Farbgemisch gemäß den obigen Ausführungen weist somit eine einfache Zusammenstellung auf, wobei gleichzeitig eine große Variabilität der einsetzbaren Pigmente und damit der erzeugbaren Farben vorliegt. Zudem ist das Farbgemisch aufgrund seiner Zusammensetzung besonders lagerstabil, ohne dass eine Verdickung oder Sedimentation eintritt.

Es wird weiterhin ein Verfahren zum Herstellen eines farbigen Aufdrucks auf einer Glas- oder Keramikoberfläche angegeben. Das Verfahren kann die Verfahrensschritte A) Herstellen eines Farbgemisches gemäß den obigen Ausführungen, B) Aufbringen des Farbgemisches auf die Glas- oder Keramikoberfläche, C) Entfernen des Mediums aus dem Farbgemisch, und D) Einbrennen des Farbgemisches auf der Glas- oder Keramikoberfläche zur Erzeugung des farbigen Aufdrucks aufweisen.

Die in Bezug auf das druckbare Farbgemisch gemachten Ausführungen bezüglich seiner Komponenten (Medium, ortho-Phosphorsäure, Metalloxide und Pigmente) und seiner Eigenschaften gelten in Bezug auf das Verfahren, in dem das Farbgemisch eingesetzt wird, analog.

Dieses Verfahren kann besonders einfach und zügig durchgeführt werden. Beispielsweise kann die Dauer zum Herstellen des Farbgemisches im Verfahrensschritt A) nur bis zu einer halben Stunde betragen, und die Durchführung der Verfahrensschritte C) und D) nur einige Minuten benötigen. Dies stellt eine deutliche Vereinfachung im Vergleich zu bisherigen Verfahren, deutlich aufwendiger sind, zum Herstellen von farbigen Aufdrucken dar.

Im Verfahrensschritt A) können das Medium und die ortho-Phosphorsäure gemischt und das zumindest eine Pigment und das zumindest eine Metalloxid in der Mischung dispergiert werden. Somit werden beispielsweise wasserfreies Glycerin und 85%ige Phosphorsäure gemischt, ein oder mehrere anorganische C.I. Pigmente zugegeben und diese mittels einer Dispergiermaschine eingearbeitet. Die Verarbeitungsviskosität kann dabei mittels des Gehalts an Medium in dem Farbgemisch eingestellt werden. Beispielsweise kann wasserfreies Glycerin mit einem Gehalt aus dem Bereich 25 bis 45 Gew% in dem Farbgemisch vorhanden sein.

Anschließend können die Metalloxide wie beispielsweise Aluminiumoxid, Yttriumoxid, Gadoliniumoxid oder Lanthanoxid zugegeben werden. Dabei können die Metalloxide als Nanopulver vorliegen. Die Dispergierung findet bei Raumtemperatur statt und führt zu einer Deagglomeration und damit zu einer Vereinzelung der Pigmente und Metalloxide. In der im Verfahrensschritt A) hergestellten Suspension können die Metalloxide als Partikel mit einer Größe von 15 bis 20 nm oder als Agglomerate mit einer Größe von 30 bis 100 nm vorliegen. Das Herstellen des Farbgemisches im Verfahrensschritt A) kann also in einem Arbeitsgang mit einer Dispergiermaschine erfolgen. Herkömmliche Präparationsschritte wie Kugelmahlung oder mittels eines Walzenstuhls werden nicht benötigt.

Der Verfahrensschritt B) kann mit einer Methode erfolgen, die aus einer Gruppe ausgewählt ist, die Flexodruck, Schablonendruck und Siebdruck umfasst. Insbesondere kann Flexodruck als Methode zum Aufbringen des Farbgemisches auf die Glas- oder Keramikoberfläche ausgewählt werden. Damit kann das Aufbringen des Farbgemisches auf die Glas- oder Keramikoberfläche mit einer unkomplizierten, einfach durchzuführenden Methode erfolgen.

Das Aufbringen der Farbmischung auf der Glas- oder Keramikoberfläche kann unstrukturiert oder strukturiert erfolgen. Mittels einer strukturierten Aufbringung können beispielsweise Herstell-Kennzeichnungen und/oder Warenzeichen auf Waren, die eine Glas- oder Keramikoberfläche wie es zum Beispiel bei Leuchtkörpern der Fall sein kann, aufweisen, aufgebracht werden.

Zur Durchführung des Verfahrensschritts C) kann eine Temperatur, die aus dem Bereich 250°C bis 350°C ausgewählt ist, und ein Zeitraum, der aus dem Bereich 5 bis 8 Sekunden ausgewählt ist, ausgewählt werden. Durch diese Temperaturbehandlung kann das Medium, beispielsweise wasserfreies Glycerin mit einem Siedepunkt von etwa 220°C verdunstet und/oder zersetzt werden. In diesem Verfahrensschritt kann weiterhin das Wasser, mit dem die ortho-Phosphorsäure, beispielsweise die 85%ige ortho-Phosphorsäure, verdünnt ist, entfernt werden. Diese Temperaturbehandlung kann beispielsweise mittels eines Gasbrenners, an dem die Glas- oder Keramikoberfläche, die mit dem Farbgemisch bedruckt ist, rotierend vorbeigeführt wird, erfolgen. Dabei werden Temperaturen von beispielsweise 300°C erreicht, die ausreichen, um das Medium zu entfernen.

Der Verfahrensschritt D) kann bei einer Temperatur, die aus dem Bereich 450 bis 650°C, vorzugsweise 480 bis 620°C, ausgewählt ist, und für einen Zeitraum, der aus dem Bereich 120 bis 150 Sekunden ausgewählt ist, durchgeführt werden. In diesem Verfahrensschritt wird der Aufdruck auf der Glas- oder Keramikoberfläche eingebrannt. Dies kann beispielsweise in einem offenen Aufheizofen, beispielsweise einem Durchschubofen, oder in einem geschlossenen Aufheizofen, beispielsweise einem Kammerofen, erfolgen. In dem Ofen kann das Einbrennen je nach Anwendung auch mittels Temperaturprofilen durchgeführt werden.

In diesem thermischen Prozess wird die ortho-Phosphorsäure zu meta-Phosphaten und/oder Polyphosphaten kondensiert. Es entsteht eine dauerhafte, abriebfeste und beständige, glasartige Struktur, in die die Pigmente eingebettet sind. Im Falle von Glasoberflächen wird gleichzeitig die Glasoberfläche angeätzt, so dass eine feste Verbindung zwischen der Glasoberfläche und dem Farbgemisch beziehungsweise der entstehenden glasartigen Struktur, in die die Pigmente eingebettet sind, entsteht. Während des Einbrennens entsteht also eine feste Verbindung zwischen Glas- oder Keramikoberfläche und dem farbigen Aufdruck und gleichzeitig eine haftfeste, beständige und abriebfeste Struktur, in die Pigmente eingebettet sind. Des Weiteren wird das Metalloxid-Nanopulver als Adhäsionsmittel aktiviert und verbessert die Haftungsfestigkeit und Abriebfestigkeit.

Der im Verfahrensschritt D) entstehende farbige Aufdruck ist abriebfest, hat eine hohe Beständigkeit und eine gute Haftung an die Glas- oder Keramikoberfläche. Dies wird beispielsweise durch einen Anteil an ortho-Phosphorsäure von 8 bis 22 Gew% in dem Farbgemisch bewirkt. Diese bildet sich in dem Verfahrensschritt D) zu meta-Phosphat und/oder Polyphosphat. Somit bildet sich eine glasartige Struktur, in die die Pigmente eingebettet sind, und die mit der bedruckten Glas- oder Keramikoberfläche fest verbunden ist. Hierbei wird die Haftfestigkeit, Beständigkeit und Abriebfestigkeit durch die Verwendung von Metalloxid, das bevorzugt als Nanopulver in einer Konzentration von 1 bis 3 Gew% vorliegt, verbessert.

Es wird weiterhin die Verwendung eines Farbgemisches gemäß den obigen Ausführungen für einen farbigen Aufdruck auf Leuchtkörpern angegeben. Unter Leuchtkörpern sind in diesem Zusammenhang beispielsweise Lampen, Glühlampen oder ähnliche Elemente, die eine Glas- oder Keramikoberfläche aufweisen, zu verstehen.

Die Leuchtkörper können mit dem Farbgemisch strukturiert bedruckt werden, womit beispielsweise Herstellkennzeichnungen oder Warenzeichen auf die Leuchtkörper aufgebracht werden können.

Durch die Verwendung des oben beschriebenen Farbgemisches kann ein sehr beständiger und abriebfester farbiger Aufdruck ermöglicht werden, der eine gute Haftung zu der Oberfläche des Leuchtkörpers aufweist. Die gute Haftung auf der Oberfläche kann insbesondere dadurch bewirkt werden, dass die in dem Farbgemisch vorhandene ortho-Phosphorsäure durch Abspaltung von Wasser zu meta-Phosphat und/oder Polyphosphat kondensiert wird und glasartige Strukturen ausbildet, deren Haftfestigkeit, Beständigkeit und Abriebfestigkeit durch nanoskalige Metalloxide weiter verbessert wird.

Dadurch, dass in dem Farbgemisch jedes anorganische C.I. Pigment eingesetzt werden kann, kann der farbige Aufdruck auf Leuchtkörpern jede Farbe und jede Mischfarbge aufweisen. Das Farbgemisch kann auf den Leuchtkörper mittels eines Verfahrens nach den obigen Ausführungen strukturiert oder unstrukturiert aufgebracht werden. Damit können die Leuchtkörper mittels eines einfachen Verfahrens mit einem farbigen Aufdruck versehen werden. Zudem kann auch ein kostengünstiges Farbgemisch für das Verfahren bereitgestellt werden, da kostengünstige Ausgangsmaterialien, insbesondere die Metalloxide, beispielsweise Aluminiumoxid, Yttriumoxid, Gadoliniumoxid oder Lanthanoxid, im Vergleich zu bisher eingesetzten Bestandteilen von Farbgemischen eingesetzt werden. Die Herstellung des Farbgemisches und das Verfahren zum Herstellung des farbigen Aufdrucks können zudem sehr zügig durchgeführt werden, was weiterhin einen Kostenvorteil beinhaltet.

In der folgenden Figur und den Ausführungsbeispielen soll die Erfindung näher erläutert werden.

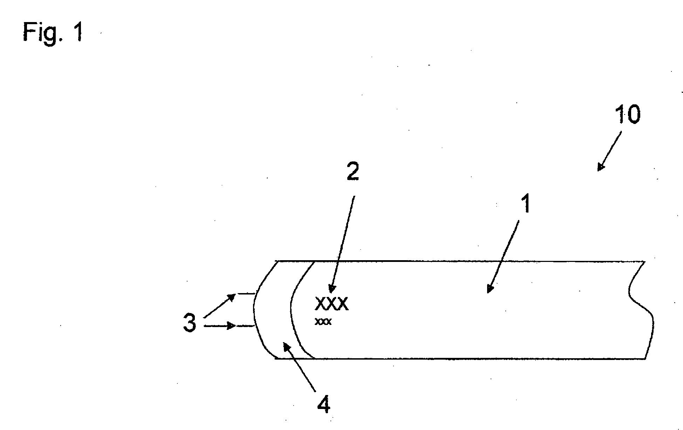

- Figur 1: Ausschnitt einer schematischen Seitenansicht eines Leuchtkörpers mit Aufdruck

Im Folgenden werden drei Ausführungsbeispiele für Farbgemische angegeben. Aufgrund der hohen Variabilität, was insbesondere die Pigmente in den Farbgemischen betrifft, sind diese drei Ausführungsbeispiele nur als Beispiele zur Veranschaulichung zu verstehen. Jede hier nicht aufgeführte Farbe kann durch Verwendung anderer Pigmente als Farbgemisch dargestellt werden.
1. Grünes Farbgemisch

| | |
|---|---|
| Wasserfreies Glycerin | 40,26 Gew% |
| ortho-Phosphorsäure 85% | 15,09 Gew% |
| Aluminiumoxid Al₂O₃ | 1,30 Gew% |
| (CO,Ni,Zn) (Ti, Al)₂O₄ (C.I. Pigment Green 50) | 33,59 Gew% |
| (Ti,Ni,Sb)O₂ (C.I. Pigment Yellow 53) | 9,76 Gew% |

2. Blaues Farbgemisch

| | |
|---|---|
| Wasserfreies Glycerin | 32,86 Gew% |
| ortho-Phosphorsäure 85% | 19,80 Gew% |
| Lanthanoxid La₂O₃ | 1,82 Gew% |
| CoAl₂O₄ (C.I. Pigment Blue 28) | 45,52 Gew% |

3. Schwarzes Farbgemisch

| | |
|---|---|
| Wasserfreies Glycerin | 29,91 Gew% |
| ortho-Phosphorsäure 85% | 20,74 Gew% |
| Yttriumoxid Y₂O₃ | 1,67 Gew% |
| Cu(Cr,Fe)₂O₄ (C.I. Pigment Black 28) | 47,68 Gew% |

In jeder dieser Ausführungsbeispiele ergibt die Summe aller Bestandteile 100 Gew%. Während die in dem grünen Farbgemisch resultierende Farbe durch eine Mischung zweier Pigmente erzeugt wird, werden die resultierenden Farben des blauen und des schwarzen Farbgemisches durch jeweils ein Pigment erzeugt.

Die Herstellung der genannten Farbgemische erfolgt durch Mischen des wasserfreien Glycerins und der 85%igen ortho-Phosphorsäure in den oben genannten Anteilen. Zu dieser Mischung wird das oder die jeweiligen Pigmente zugegeben und mittels einer Dispergiermaschine eingearbeitet. Abschließend wird das jeweilige Metalloxid in Nanopulverform zugegeben und ebenfalls dispergiert. Damit wird eine viskose Suspension hergestellt, die sich gut lagern lässt, da die Metalloxide und Pigmente sich nicht in dem Glycerin/ortho-Phosphorsäure Gemisch auflösen. Durch das Vorhandensein des Nanopulvers wird weiterhin die Sedimentation der Pigmente in dem Farbgemisch verhindert. Das Nanopulver wirkt somit als eine Art Abstandshalter in dem Farbgemisch.

Die Farbgemische können gemäß den obigen Ausführungen mit einem Verfahren zur Herstellung eines farbigen Aufdrucks auf Glas- oder Keramikoberflächen aufgebracht werden und zu einem abriebfesten, beständigen farbigen Aufdruck, der eine gute Haftung zu der Glas- oder Keramikoberfläche aufweist, verarbeitet werden.

Wie den Ausführungsbeispielen zu entnehmen ist, handelt es sich bei den Farbgemischen um einfache bleifreie Zusammenstellungen, die nicht toxisch sind und eine hohe Variabilität aufweisen, da die Auswahl der Farben aus den anorganischen C.I. Pigmenten so groß ist, dass jede gewünschte Farbe hergestellt werden kann. Weiterhin können die Farbgemische aufgrund ihrer Zusammensetzung besonders gut gelagert werden.

In Figur 1 ist der Ausschnitt einer schematischen Seitenansicht eines Leuchtkörpers 10 mit Aufdruck 2 dargestellt. Es ist ein Teil einer Röhre 1 mit Glasoberfläche dargestellt, auf die ein Aufdruck 2 aufgebracht ist. Weiterhin ist die Ummantelung 4 und die Anschlüsse 3 gezeigt. Bei diesem Leuchtkörper handelt es sich beispielhaft um eine Stablampe. Jede andere Form von Leuchtkörpern, die hier nicht gezeigt sind, kann ebenso mit einem Aufdruck 2 versehen werden.

Die Farbe des Aufdrucks 2 ist in dieser Figur exemplarisch schwarz, sie kann jedoch jede beliebige Farbe umfassen, je nachdem aus welchem Farbgemisch der Aufdruck 2 hergestellt wird. Der Aufdruck 2 in Figur 1 stellt den Buchstaben "X" in mehrfacher Wiederholung und in verschiedenen Größen dar, was exemplarisch zu verstehen ist. Wenn das Farbgemisch beispielsweise mittels Flexodruck auf die Glasoberfläche aufgebracht und dann dort zur Herstellung des Aufdrucks eingebrannt wird, kann jede beliebige Zeichenfolge dargestellt werden. So kann der Aufdruck beispielsweise Herstellkennzeichnungen oder Warenzeichen darstellen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Druckbares Farbgemisch aufweisend
- ein Medium,
- ortho-Phosphorsäure,
- zumindest ein Metalloxid, und
- zumindest ein Pigment, wobei
das Medium mit einem Anteil von 25 bis 45 Gew%, die ortho-Phosphorsäure mit einem Anteil von 8 bis 22 Gew%, das Metalloxid mit einem Anteil von 1 bis 3 Gew% und das Pigment mit einem Anteil von 35 bis 50 Gew% enthalten ist.

2. Farbgemisch nach einem der vorhergehenden Ansprüche, wobei das Metalloxid als Nanopulver ausgeformt ist.

3. Farbgemisch nach einem der vorhergehenden Ansprüche, wobei das Metalloxid ein dreiwertiges Kation umfasst.

4. Farbgemisch nach dem vorhergehenden Anspruch, wobei das Metallkation aus einer Gruppe ausgewählt ist, die Kationen von Aluminium, Scandium, Yttrium und Lanthanoiden umfasst.

5. Farbgemisch nach einem der vorhergehenden Ansprüche, wobei das Medium Glycerin ist.

6. Farbgemisch nach dem vorhergehenden Anspruch,
wobei die ortho-Phosphorsäure Wasser mit einer Konzentration von 15% enthält.

7. Farbgemisch nach einem der vorhergehenden Ansprüche, wobei das Pigment aus anorganischen C.I. Pigmenten ausgewählt ist.

8. Farbgemisch nach einem der vorhergehenden Ansprüche, das bleifrei ist.

9. Verfahren zum Herstellen eines farbigen Aufdrucks (2) auf einer Glas- oder Keramikoberfläche, mit den Verfahrensschritten
A) Herstellen eines Farbgemisches nach einem der vorhergehenden Ansprüche,
B) Aufbringen des Farbgemisches auf die Glas- oder Keramikoberfläche,
C) Entfernen des Mediums aus dem Farbgemisch,
D) Einbrennen des Farbgemisches auf der Glas- oder Keramikoberfläche zur Erzeugung des farbigen Aufdrucks (2).

10. Verfahren nach dem vorhergehenden Anspruch, wobei im Verfahrensschritt A) das Medium und die ortho-Phosphorsäure gemischt werden und das zumindest eine Pigment und das zumindest eine Metalloxid in der Mischung dispergiert werden.

11. Verfahren nach einem der Ansprüche 9 oder 10, wobei der Verfahrensschritt B) mit einer Methode erfolgt, die aus einer Gruppe ausgewählt ist, die Flexodruck, Schablonendruck und Siebdruck umfasst.

12. Verfahren nach einem der Ansprüche 10 bis 12, wobei der Verfahrensschritt C) bei einer Temperatur, die aus dem Bereich 250°C bis 350°C ausgewählt ist, und für einen Zeitraum, der aus dem Bereich 5 bis 8 Sekunden ausgewählt ist, durchgeführt wird.

13. Verfahren nach einem der Ansprüche 9 bis 12, wobei der Verfahrensschritt D) bei einer Temperatur, die aus dem Bereich 450°C bis 650°C ausgewählt ist, und für einen Zeitraum, der aus dem Bereich 120 bis 150 Sekunden ausgewählt ist, durchgeführt wird.

14. Verwendung des Farbgemisches nach den Ansprüchen 1 bis 8 für einen farbigen Aufdruck (2) auf Leuchtkörpern (10).

## Claims

1. Printable ink mixture comprising
- a medium,
- orthophosphoric acid,
- at least one metal oxide, and
- at least one pigment
wherein
the medium is present in a proportion of 25 to 45% by weight, the orthophosphoric acid in a proportion of 8 to 22% by weight, the metal oxide in a proportion of 1 to 3% by weight and the pigment in a proportion of 35 to 50% by weight.

2. Ink mixture according to the preceding claim, wherein the metal oxide takes the form of a nanopowder.

3. Ink mixture according to either of the preceding claims, wherein the metal oxide comprises a trivalent cation.

4. Ink mixture according to the preceding claim, wherein the metal cation is selected from a group comprising cations of aluminum, scandium, yttrium and lanthanoids.

5. Ink mixture according to any of the preceding claims, wherein the medium is glycerol.

6. Ink mixture according to the preceding claim, wherein the orthophosphoric acid comprises water in a concentration of 15%.

7. Ink mixture according to any of the preceding claims, wherein the pigment is selected from inorganic C.I. pigments.

8. Ink mixture according to any of the preceding claims, which is lead-free.

9. Process for producing a color print (2) on a glass or ceramic surface, comprising the process steps of
A) producing an ink mixture according to any of the preceding claims,
B) applying the ink mixture to the glass or ceramic surface,
C) removing the medium from the ink mixture,
D) baking the ink mixture on the glass or ceramic surface to produce the color print (2).

10. Process according to the preceding claim, wherein the medium and the orthophosphoric acid are mixed in process step A), and the at least one pigment and the at least one metal oxide are dispersed in the mixture.

11. Process according to either of Claims 9 and 10, wherein process step B) is effected by a method selected from a group comprising flexographic printing, stencil printing and screen printing.

12. Process according to any of Claims 9 to 11, wherein process step C) is performed at a temperature selected from the range of 250°C to 350°C, and for a period selected from the range of 5 to 8 seconds.

13. Process according to any of Claims 9 to 12, wherein process step D) is performed as a temperature selected from the range of 450°C to 650°C, and for a period selected from the range of 120 to 150 seconds.

14. Use of the ink mixture according to Claims 1 to 8 for a color print (2) on luminous bodies (10).

## Revendications

1. Mélange de couleurs imprimable, présentant :
- un milieu ;
- de l'acide ortho-phosphorique ;
- au moins un oxyde métallique ; et
- au moins un pigment, dans lequel
le milieu est contenu avec une fraction de 25 à 45 % en poids, l'acide ortho-phosphorique avec une fraction de 8 à 22 % en poids, l'oxyde métallique avec une fraction de 1 à 3 % en poids et le pigment avec une fraction de 35 à 50 % en poids.

2. Mélange de couleurs selon la revendication précédente, dans lequel l'oxyde métallique est réalisé sous la forme d'une nanopoudre.

3. Mélange de couleurs selon l'une quelconque des revendications précédentes, dans lequel l'oxyde métallique comprend un cation trivalent.

4. Mélange de couleurs selon l'une quelconque des revendications précédentes, dans lequel le cation métallique est choisi parmi un groupe qui comprend des cations d'aluminium, de scandium, d'yttrium et de lanthanides.

5. Mélange de couleurs selon l'une quelconque des revendications précédentes, dans lequel le milieu est le glycérol.

6. Mélange de couleurs selon l'une quelconque des revendications précédentes, dans lequel l'acide ortho-phosphorique contient de l'eau avec une concentration de 15 %.

7. Mélange de couleurs selon l'une quelconque des revendications précédentes, dans lequel le pigment est choisi parmi des pigments C.I. inorganiques.

8. Mélange de couleurs selon l'une quelconque des revendications précédentes, qui est exempt de plomb.

9. Procédé pour la préparation d'un imprimé en couleurs (2) sur une surface en verre ou en céramique, comprenant les étapes opératoires dans lesquelles :
A) on prépare un mélange de couleurs selon l'une quelconque des revendications précédentes ;
B) on applique le mélange de couleurs sur la surface en verre ou en céramique ;
C) on élimine le milieu du mélange de couleurs ;
D) on cuit le mélange de couleurs sur la surface en verre ou en céramique pour obtenir l'imprimé en couleurs (2).

10. Procédé selon la revendication précédente, dans lequel, à l'étape opératoire A), on mélange le milieu et l'acide ortho-phosphorique et on disperse dans le mélange ledit au moins un pigment et ledit au moins un oxyde métallique.

11. Procédé selon l'une quelconque des revendications 9 ou 10, dans lequel l'étape opératoire B) a lieu avec un procédé qui est choisi parmi le groupe comprenant la flexographie, l'impression au pochoir et la sérigraphie.

12. Procédé selon l'une quelconque des revendications 10 à 12, dans lequel l'étape opératoire C) est mise en oeuvre à une température qui est choisie dans la plage de 250 °C à 350 °C et pendant un laps de temps qui est choisi dans la plage de 5 à 8 secondes.

13. Procédé selon l'une quelconque des revendications 9 à 12, dans lequel l'étape opératoire D) est mise en oeuvre à une température qui est choisie dans la plage de 450 °C à 650 °C et pendant un laps de temps qui est choisi dans la plage de 120 à 150 secondes.

14. Utilisation du mélange de couleurs selon les revendications 1 à 8 pour un imprimé en couleurs (2) sur des corps de lampes (10).
